# FASCICULE DE BREVET EUROPEEN

(11) **EP 0 646 735 B1**
(45) Date de publication et mention de la délivrance du brevet: **02.04.1997**
(21) Numéro de dépôt: 94401882.9
(22) Date de dépôt: 22.08.1994
(51) Int. Cl.: F16F 13/00

(54) **Perfectionnements aux supports antivibratoires hydrauliques**
Verbesserungen an hydraulischen Schwingungsdämpfenden Stützen
Improvements to hydraulical vibration damping supports

(30) Priorité: 05.10.1993 FR 9311848
(43) Date de publication de la demande: 05.04.1995
(73) Titulaire: HUTCHINSON, F-75008 Paris (FR)
(72) Inventeur: Bellamy, Alain, F-41100 Naveil (FR); Reh, Denis, F-28200 Chateaudun (FR); Girard, André, F-28200 La Chapelle du Noyer (FR); Chenais, Gilles, F-28200 Marboue (FR)
(74) Mandataire: Burbaud, Eric

(56) Documents cités:
- EP-A- 0 236 199
- FR-A- 2 587 429
- GB-A- 2 192 968
- US-A- 4 886 253
- PATENT ABSTRACTS OF JAPAN vol. 14, no. 209 (M-968) (4152) 27 Avril 1990 & JP-A-02 046 337 (HONDA MOTOR CO LTD.)
- PATENT ABSTRACTS OF JAPAN vol. 6, no. 187 (M-158) (1065) 25 Septembre 1982 & JP-A-57 094 144 (KINUGAWA GOMU KOGYO K.K.)

## Description

L'invention concerne les supports antivibratoires destinés à être interposés aux fins d'amortissement et de liaison, entre deux éléments rigides tels qu'un châssis et un moteur de véhicule, pour amortir des mouvements vibratoires entre ces deux éléments rigides, essentiellement selon une direction principale de vibration Z.

Parmi ces supports antivibratoires, l'invention concerne plus particulièrement ceux qui comportent une première et une deuxième armatures rigides solidarisables respectivement avec les deux éléments rigides à réunir, un corps en élastomère qui comporte une paroi épaisse reliant entre elles les deux armatures rigides et délimitant partiellement une chambre de travail, ce corps en élastomère comportant en outre une paroi mince librement déformable qui délimite partiellement une chambre de compensation communiquant avec la chambre de travail par un canal étroit, les deux chambres et le canal étroit étant remplis d'un liquide, l'une des deux armatures, dite ci-après deuxième armature, étant une plaque qui est sensiblement perpendiculaire à la direction principale de vibration Z et qui présente une face solidarisée de façon étanche avec le corps en élastomère pour délimiter avec celui-ci les deux chambres et le canal étroit, la paroi épaisse présentant un bord sensiblement périphérique qui est solidarisé avec la deuxième armature.

Les supports antivibratoires de ce type ont l'avantage de présenter un faible encombrement en hauteur, au contraire des supports antivibratoires dans lesquels les chambres de travail et de compensation sont alignées selon la direction Z au lieu d'être juxtaposées. De plus, ils se composent d'un faible nombre de pièces, dans la mesure où leur corps en élastomère est moulé d'une seule pièce et où ils ne nécessitent pas de cloison rigide interposée entre les chambres de travail et de compensation, au contraire des supports antivibratoires dans lesquels les chambres de travail et de compensation sont alignées selon la direction Z au lieu d'être juxtaposées.

Un tel dispositif est décrit, par exemple dans le document EP-A-0 236 199.

Toutefois, dans le support antivibratoire divulgué par ce document, la chambre de compensation est délimitée par deux parois latérales épaisses et un fond mince, lequel fond mince représente une faible proportion de la surface interne qui délimite la chambre de compensation. Par conséquent, la chambre de compensation est faiblement déformable, de sorte qu'elle doit avoir un grand volume pour admettre des variations de volume en correspondance avec celles de la chambre de travail.

La présente invention a notamment pour but de remédier à cet inconvénient.

A cet effet, la paroi mince présente sensiblement la forme d'une cloche comportant un bord sensiblement périphérique qui est solidarisé avec la deuxième armature, ladite paroi mince étant reliée à la paroi épaisse seulement par une partie dudit bord, les chambres de travail et de compensation étant juxtaposées de façon non concentrique sur la face de la deuxième armature qui est solidarisée avec le corps en élastomère.

Ainsi, la paroi de la chambre de compensation est déformable sur toute sa surface, sauf au voisinage de son bord, qui est solidarisé avec la deuxième armature du support antivibratoire. De cette façon, la paroi de la chambre de compensation est très déformable, de sorte que le volume de la chambre de compensation peut être minimisé au repos.

De plus, les déformations de la paroi épaisse ne perturbent pas le fonctionnement de la chambre de compensation, du fait que la paroi mince est séparée de la paroi épaisse.

Enfin, la disposition de la chambre de compensation qui est juxtaposée à la chambre de travail sur une face de la plaque rigide qui constitue la deuxième armature, permet notamment :
- un moulage plus simple du corps en élastomère,
- une plus grande liberté de choix, lors de la conception du support, des dimensions de la plaque rigide qui constitue la deuxième armature, en fonction de la place disponible pour le support antivibratoire dans le véhicule auquel il est destiné,
- et une plus grande liberté de choix, lors de la conception du support, du cheminement du canal étroit, à l'interface entre le corps en élastomère et la plaque rigide qui constitue la deuxième armature, afin de choisir la longueur de ce canal étroit pour déterminer la fréquence pour laquelle l'amortissement procuré par le support antivibratoire est maximal, laquelle fréquence dépend du rapport entre la longueur et le diamètre du canal étroit.

Dans des modes de réalisation préférés de l'invention, on a recours à l'une et/ou à l'autre des dispositions suivantes :
- les bords de la paroi épaisse et de la paroi mince du corps en élastomère sont surmoulés sur une plaque ajourée rigide, qui est fixée à la deuxième armature, notamment par sertissage ;
- le canal étroit est formé par une gorge de la plaque ajourée, les bords de ladite gorge étant appliqués en contact étanche contre la deuxième armature ;
- la première armature est un organe allongé selon un axe X sensiblement perpendiculaire à la direction principale de vibration Z, le support comportant en outre un arceau rigide qui est fixé à la deuxième armature et qui est disposé autour de la première armature et du corps en élastomère, le corps en élastomère comportant au moins un premier bossage qui s'étend à l'opposé de la deuxième armature à partir de la première armature, ce premier bossage étant adapté à buter contre l'arceau pour limiter le déplacement de la première armature en éloignement par rapport à la deuxième armature selon la direction principale de vibration Z, selon un principe voisin de celui enseigné par le document FR-A-2 628 805 ;
- le corps en élastomère comporte un deuxième bossage qui s'étend vers la deuxième armature à partir de la première armature et qui pénètre à l'intérieur de la chambre de travail, pour limiter le déplacement de la première armature vers la deuxième armature ;
- le corps en élastomère comporte en outre au moins un bossage latéral qui s'étend vers l'arceau sensiblement perpendiculairement à la direction principale de vibration Z à partir de la première armature, et qui est adapté à buter contre l'arceau pour limiter le débattement de la première armature parallèlement à la deuxième armature ;
- l'arceau est une plaque courbée, qui recouvre la paroi mince du corps en élastomère ;
- la chambre de compensation est alignée par rapport à la chambre de travail parallèlement à l'axe X;
- la première armature est un bras rigide qui présente une partie sur laquelle est surmoulé le corps en élastomère et qui présente également une partie saillante s'étendant hors du corps en élastomère et pourvue de moyens de fixation ;
- les deux chambres sont reliées par un passage secondaire qui est obturé par un clapet ayant un débattement limité ;
- le clapet est monté sur un support qui est interposé entre la chambre de travail et la deuxième armature, le clapet ayant un côté en contact avec le liquide contenu dans la chambre de travail, et un côté dirigé vers la deuxième armature, qui communique avec la chambre de compensation par l'intermédiaire du passage secondaire, ledit passage secondaire étant formé entre le corps en élastomère et la deuxième armature.

D'autres caractéristiques et avantages de la l'invention apparaîtront au cours de la description détaillée suivante de trois de ses formes de réalisations, données à titre d'exemples non limitatifs, en regard des dessins joints.

Sur les dessins :
- la figure 1 est une vue en coupe d'une première forme de réalisation de l'invention, la coupe étant prise selon la ligne I-I de la figure 2,
- la figure 2 est une vue en coupe selon la ligne II-II de la figure 1,
- la figure 3 est une vue de dessous du dispositif des figures 1 et 2,
- les figures 4 à 6 sont des vues analogues aux figures 1 à 3, pour une deuxième forme de réalisation de l'invention, et
- les figures 7 et 8 sont des vues en élévation, respectivement de côté et en bout, d'une troisième forme de réalisation de l'invention.

Sur les différentes figures, les mêmes références désignent des éléments identiques ou similaires.

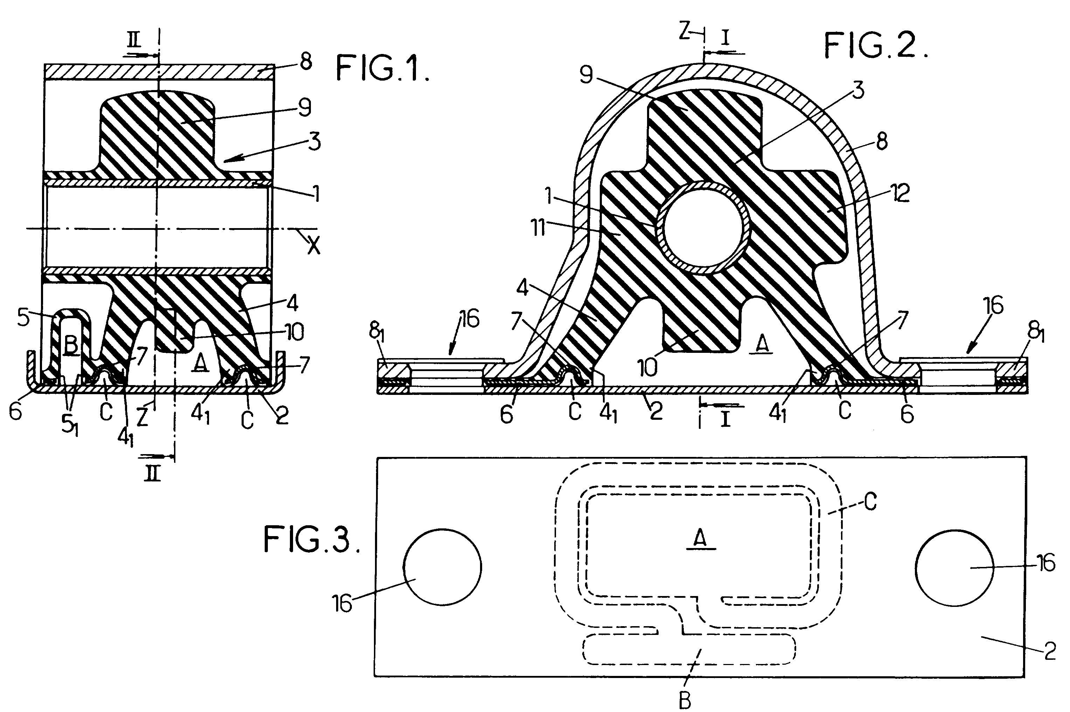

Dans la première forme de réalisation de l'invention, représentée sur les figures 1 à 3, le support antivibratoire comporte deux armatures métalliques 1 et 2 qui sont reliées entre elles par un corps en élastomère 3. La première armature 1 est tubulaire dans l'exemple représenté, et présente un axe longitudinal X. De façon plus générale, la première armature 1 peut avoir la forme d'un organe allongé plein ou creux, de section circulaire ou non. La deuxième armature 2, quant à elle, est une plaque qui présente une forme générale plane au moins par morceaux, et qui s'étend parallèlement à l'axe X de la première armature.

Le corps en élastomère 3 est solidarisé avec la première armature 1 par vulcanisation. Il comporte une paroi épaisse 4, qui s'étend depuis la première armature 1 jusqu'à la deuxième armature 2, selon une direction Z dans laquelle on souhaite amortir des mouvements vibratoires entre les deux armatures. La direction Z est perpendiculaire à l'axe X et au plan de la deuxième armature 2, et elle est généralement verticale.

La paroi épaisse 4 présente une résistance à la compression suffisante pour supporter une charge appliquée à la première armature parallèlement à l'axe Z et dirigée vers la deuxième armature.

La paroi épaisse 4 comporte un bord libre 4₁, qui est solidarisé de façon étanche avec la deuxième armature 2, en délimitant ainsi une chambre de travail A qui a ici une section horizontale rectangulaire.

Le corps en élastomère 3 comporte en outre une paroi mince 5, souple, qui est juxtaposée à la paroi épaisse 4, et qui présente une forme de cloche, avec un bord libre 5₁ qui est également solidarisé avec la deuxième armature 2, en délimitant ainsi une chambre de compensation B, qui elle aussi a ici une section horizontale rectangulaire.

Les deux chambres A et B communiquent par l'intermédiaire d'un canal étroit C, qui a la forme d'une gorge creusée dans le corps en élastomère 3, les bords de la gorge étant en contact étanche contre la deuxième armature 2.

Les chambres A et B, ainsi que le canal étroit C, sont remplis de liquide. Lorsque les deux armatures 1 et 2 subissent des mouvements relatifs de vibration, la paroi épaisse 4 du corps en élastomère se déforme, ce qui provoque des variations de volume de la chambre de travail A. Ces variations de volume entraînent des transferts de liquide entre les chambres A et B, par l'intermédiaire du canal étroit C, les variations de volume de la chambre de travail A étant compensées par des variations complémentaires de la chambre de compensation B, dont la paroi mince 5 est facilement déformable. Au voisinage d'une certaine fréquence, qui dépend essentiellement des dimensions du canal étroit C et de la masse volumique du liquide en mouvement dans ledit canal étroit, il se produit dans le canal étroit C un phénomène de résonance qui provoque un fort amortissement des vibrations entre les deux armatures 1 et 2.

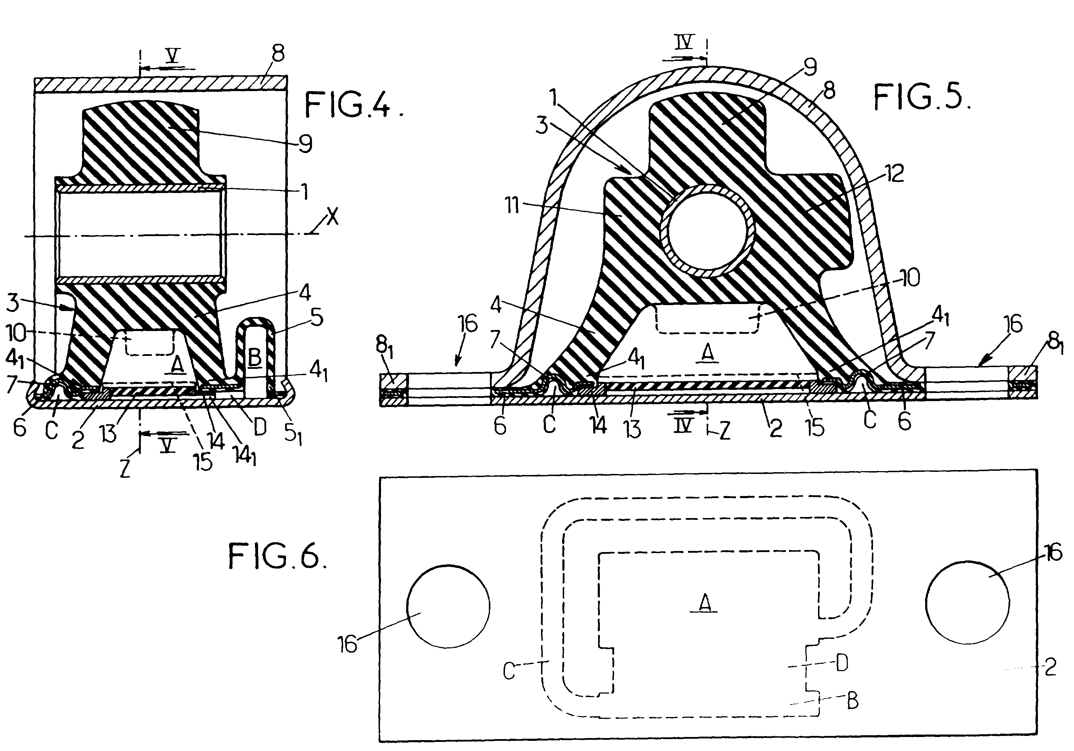

Dans l'exemple représenté, le corps en élastomère 3 est surmoulé sur une plaque métallique ajourée 6, qui est disposée sur la face du corps en élastomère qui est en contact avec la deuxième armature 2. Ainsi, la deuxième armature 2 peut être solidarisée avec le corps en élastomère par sertissage de ladite deuxième armature sur ladite plaque ajourée 6 (voir en particulier la figure 4).

En outre, la plaque ajourée 6 comporte une gorge 7 qui détermine la forme du canal étroit C, avec une grande précision.

Le support antivibratoire des figures 1 à 3 comporte en outre un arceau 8 métallique qui est fixé de façon rigide à la deuxième armature 2. L'arceau 8 entoure la première armature 1 et le corps en élastomère 3, et il s'étend parallèlement à l'axe X.

Dans l'exemple représenté, l'arceau 8 est une plaque pliée, qui recouvre la totalité du corps en élastomère, de façon à le protéger contre les chocs de corps extérieurs. Ceci est avantageux dans la mesure où la paroi mince 5 est fragile et exposée à côté de la paroi épaisse 4.

L'arceau 8 comporte deux prolongements latéraux 8₁, respectivement de chaque côté du corps en élastomère 3. Ces prolongements latéraux recouvrent chacun une partie de la plaque ajourée 6, qui elle-même recouvre la deuxième armature. De plus, ces trois éléments sont traversés par un perçage 16 au niveau de chaque prolongement 8₁. Ces perçages 16 permettent de fixer le support antivibratoire sur une pièce rigide, au moyen de vis ou de boulons (non représentés), en complétant en outre la solidarisation des différentes parties du support antivibratoire par serrage des prolongements 8₁ sur la plaque 6 et la deuxième armature 2.

Le corps en élastomère 3 comporte un premier bossage 9, qui s'étend parallèlement à l'axe Z à partir de la première armature 1, en direction opposée à la deuxième armature 2. Ce bossage 9 est adapté à buter contre la partie supérieure de l'arceau 8, en limitant ainsi le déplacement de la première armature en éloignement par rapport à la deuxième armature.

Le corps en élastomère 3 comporte en outre un deuxième bossage 10, qui s'étend à partir de la première armature 1 vers la deuxième armature 2, parallèlement à l'axe Z, et qui pénètre dans la chambre de travail A. Ce deuxième bossage 10 est adapté à buter contre la deuxième armature 2 en limitant ainsi le déplacement possible de la première armature vers la deuxième armature.

Enfin, le corps en élastomère comporte des bossages latéraux 11, 12 sensiblement diamétralement opposés par rapport à la première armature 1, qui sont adaptés à buter contre l'arceau 8 lorsque la première armature est déplacée sensiblement parallèlement à la deuxième armature 2, et perpendiculairement à la première armature 1.

La deuxième forme de réalisation de l'invention, représentée sur les figures 4 à 6, comporte de nombreux éléments communs à la première forme de réalisation, et ne sera donc pas décrite en détail ici. Cette deuxième forme de réalisation se différencie de la première forme de réalisation par le fait que les deux chambres A et B sont également reliées entre elles par un passage secondaire D de grande section et de faible longueur, qui est formé entre le corps en élastomère 3 et la deuxième armature 2.

Le passage D est obturé par un clapet qui est ici une membrane souple 13 en élastomère, dont le débattement est limité, et qui permet que les vibrations de fréquence élevée et de faible amplitude ne soient pas transmises d'une armature à l'autre, de façon bien connue.

En effet, une vibration de fréquence élevée et de faible amplitude exercée sur une des deux armatures est transmise à la membrane 13 par le liquide et se traduit par une succession rapide de déformations alternatives de cette membrane perpendiculairement à elle-même, d'amplitude inférieure à la valeur maximum possible. Les dimensions de la membrane sont suffisantes pour que le liquide ne soit pas alors refoulé à travers le canal étroit C selon des sens opposés en synchronisme avec ladite vibration.

Au contraire, pour les oscillations d'amplitude plus élevée et de fréquence plus basse, l'amplitude des déformations correspondantes de la membrane 13 atteint sa valeur maximum possible et le liquide est alors refoulé à travers le canal étroit C, ce qui assure l'amortissement hydraulique désiré par étranglement de ce liquide.

Dans l'exemple représenté, la membrane souple 13 est reliée par son bord extérieur à un cadre métallique 14, qui est interposé entre le bord libre 4₁ de la paroi épaisse 4 du corps en élastomère, et la deuxième armature 2.

Le cadre métallique 14 positionne la membrane 13 à une faible distance au-dessus de la deuxième armature 2, et il définit avec la deuxième armature un passage 14₁ qui fait communiquer la face inférieure de la membrane 13 avec le passage secondaire D et la chambre de compensation B, tandis que la face supérieure de la membrane 13 est au contact de la chambre de travail A.

Le débattement de la membrane 13 vers le bas est limité par la deuxième armature 2, tandis que le débattement de la membrane 13 vers le haut est limité uniquement par l'élasticité de la membrane.

Eventuellement, la membrane 13 pourrait être recouverte par une grille métallique 15, qui limite son débattement vers le haut.

Lorsqu'il existe une telle grille 15, la membrane 13 peut éventuellement ne pas être solidarisée avec le cadre 14 et elle peut être éventuellement rigide. Dans ce cas, la membrane 13 peut éventuellement être disposée entre deux grilles identiques, qui limitent son débattement vers le haut et vers le bas.

Lorsque le support antivibratoire comporte une grille 15, le corps en élastomère 3 peut comporter le bossage 10 susmentionné, qui limite le déplacement de la première armature vers la deuxième armature. Par contre, lorsque le support antivibratoire ne comporte pas la grille 15, il est préférable que le corps en élastomère ne comporte pas ce bossage 10, qui risquerait d'endommager la membrane 13.

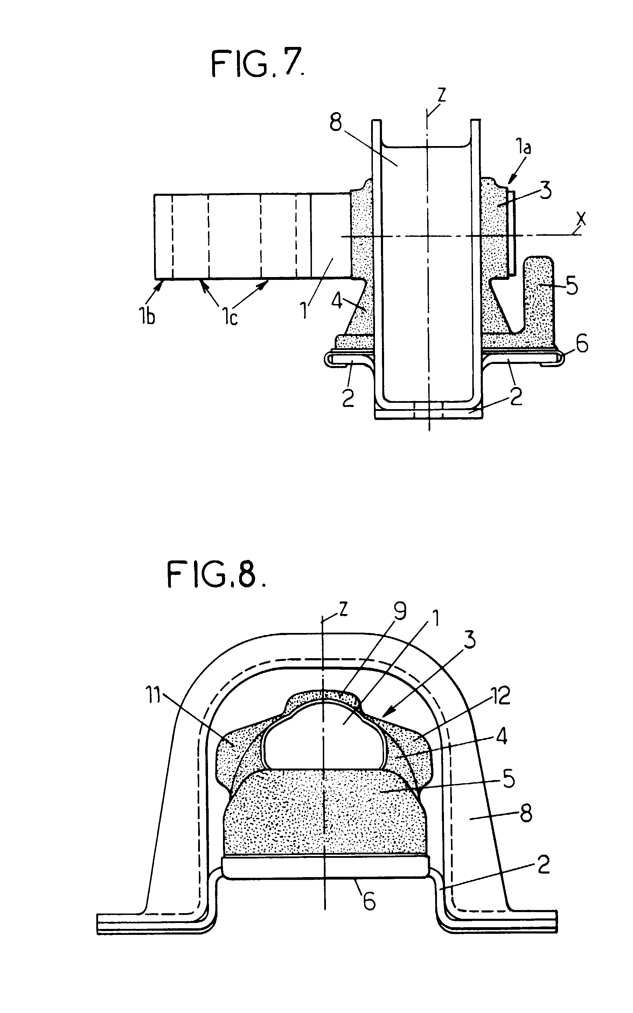

La troisième forme de réalisation de l'invention, représentée sur les figures 7 et 8, est similaire aux première et deuxième formes de réalisation déjà décrites, et ne sera donc pas décrite en détail.

Dans cette troisième forme de réalisation, la première armature 1 est un bras rigide qui s'étend axialement entre une première extrémité la sur laquelle est surmoulé le corps en élastomère 3 et une deuxième extrémité 1b qui fait saillie hors du corps en élastomère 3 et qui est pourvue de trous de fixation 1c ou d'autres moyens de fixation. On peut ainsi fixer la deuxième extrémité 1b du bras rigide 1 à un moteur de véhicule automobile, la plaque rigide 2 étant alors fixée au châssis du véhicule.

## Revendications

1. Support antivibratoire hydraulique, destiné à être interposé entre deux éléments rigides pour amortir des vibrations entre ces deux éléments, essentiellement selon une direction principale de vibration Z, ce support comportant une première (1) et une deuxième (2) armatures rigides, solidarisables respectivement avec les deux éléments rigides à réunir, un corps en élastomère (3) qui comporte une paroi épaisse (4) reliant entre elles les deux armatures rigides (1, 2) et délimitant partiellement une chambre de travail (A), ce corps en élastomère (3) comportant en outre une paroi mince (5) librement déformable qui délimite partiellement une chambre de compensation (B) communiquant avec la chambre de travail (A) par un canal étroit (C), les deux chambres (A, B) et le canal étroit (C) étant remplis d'un liquide, l'une (2) des deux armatures, dite ci-après deuxième armature, étant une plaque qui est sensiblement perpendiculaire à la direction principale de vibration Z et qui présente une face solidarisée de façon étanche avec le corps en élastomère pour délimiter avec celui-ci les deux chambres (A, B) et le canal étroit (C), la paroi épaisse (4) présentant un bord (4₁) sensiblement périphérique qui est solidarisé avec la deuxième armature (2),
**caractérisé en ce que** la paroi mince (5) présente sensiblement la forme d'une cloche comportant un bord (5₁) sensiblement périphérique qui est solidarisé avec la deuxième armature, ladite paroi mince étant reliée à la paroi épaisse (4) seulement par une partie dudit bord (5₁), les chambres de travail (A) et de compensation (B) étant juxtaposées de façon non concentrique sur la face de la deuxième armature (2) qui est solidarisée avec le corps en élastomère (3).

2. Support antivibratoire selon la revendication 1, dans lequel les bords (4₁, 5₁) de la paroi épaisse et de la paroi mince du corps en élastomère sont surmoulés sur une plaque ajourée rigide (6), qui est fixée à la deuxième armature (2).

3. Support antivibratoire selon l'une quelconque des revendications 1 et 2, dans lequel le canal étroit (C) est formé par une gorge (7) de la plaque ajourée (6), les bords de ladite gorge étant appliqués en contact étanche contre la deuxième armature (2).

4. Support antivibratoire selon l'une quelconque des revendications précédentes, dans lequel la première armature (1) est un organe allongé selon un axe X sensiblement perpendiculaire à la direction principale de vibration Z, le support comportant en outre un arceau (8) rigide qui est fixé à la deuxième armature et qui est disposé autour de la première armature et du corps en élastomère, le corps en élastomère comportant au moins un premier bossage (9) qui s'étend à l'opposé de la deuxième armature à partir de la première armature, ce premier bossage étant adapté à buter contre l'arceau (8) pour limiter le déplacement de la première armature en éloignement par rapport à la deuxième armature selon la direction principale de vibration Z.

5. Support antivibratoire selon la revendication 4, dans lequel le corps en élastomère comporte un deuxième bossage (10) qui s'étend vers la deuxième armature (2) à partir de la première armature (1) et qui pénètre à l'intérieur de la chambre de travail (A), pour limiter le déplacement de la première armature vers la deuxième armature.

6. Support antivibratoire selon l'une quelconque des revendications 4 et 5, dans lequel le corps en élastomère comporte en outre au moins un bossage latéral (11, 12) qui s'étend vers l'arceau (8) sensiblement perpendiculairement à la direction principale de vibration Z à partir de la première armature (1), et qui est adapté à buter contre l'arceau (8) pour limiter le débattement de la première armature parallèlement à la deuxième armature.

7. Support antivibratoire selon l'une quelconque des revendications 4 à 6, dans lequel l'arceau (8) est une plaque courbée, qui recouvre la paroi mince (5) du corps en élastomère.

8. Support antivibratoire selon l'une quelconque des revendications 4 à 7, dans lequel la chambre de compensation (B) est alignée par rapport à la chambre de travail (A) parallèlement à l'axe X.

9. Support antivibratoire selon l'une quelconque des revendications 4 à 8, dans lequel la première armature (1) est un bras rigide qui présente une partie (1a) sur laquelle est surmoulé le corps en élastomère (3) et qui présente également une partie saillante (1b) s'étendant hors du corps en élastomère et pourvue de moyens de fixation (1c).

10. Support antivibratoire selon l'une quelconque des revendications précédentes, dans lequel les deux chambres (A, B) sont reliées par un passage secondaire (D) qui est obturé par un clapet (13) ayant un débattement limité.

11. Support antivibratoire selon la revendication 10, dans lequel le clapet (13) est monté sur un support (14) qui est interposé entre la chambre de travail (A) et la deuxième armature (2), le clapet ayant un côté en contact avec le liquide contenu dans la chambre de travail (A), et un côté dirigé vers la deuxième armature, qui communique avec la chambre de compensation (B) par l'intermédiaire du passage secondaire (D), ledit passage secondaire étant formé entre le corps en élastomère (3) et la deuxième armature (2).

## Patentansprüche

1. Dämpfende hydraulische Stütze, die dazu bestimmt ist, zwischen zwei festen Elementen zur Dämpfung von Schwingungen zwischen diesen beiden Elementen angeordnet zu werden, im wesentlichen gemäß einer Hauptschwingungsrichtung Z, wobei die Stütze eine erste (1) und eine zweite (2) feste Umhüllung, die jeweils fest mit den beiden festen, zu verbindenden Elementen verbunden sind, und einen elastomeren Körper (3) aufweist, der eine dicke Wand (4) aufweist, welche zwischen sich die beiden festen Umhüllungen (1,2) verbindet und bereichsweise eine Arbeitskammer (A) begrenzt, wobei der elastomere Körper (3) außerdem eine dünne, frei deformierbare Wand (5) aufweist, die bereichsweise eine Kompensationskammer (B) begrenzt, welche mit der Arbeitskammer (A) durch einen engen Kanal (C) kommuniziert, wobei die beiden Kammern (A,B) und der enge Kanal (C) mit einer Flüssigkeit gefüllt sind, wobei eine (2) der beiden Umhüllungen, nachfolgend die zweite Umhüllung genannt, eine Platte ist, die sich im wesentlichen senkrecht zur Hauptschwingungsrichtung Z erstreckt und eine Oberfläche aufweist, welche fest und dicht mit dem elastomeren Körper verbunden ist, um mit diesem die beiden Kammern (A,B) und den engen Kanal (C) zu begrenzen, wobei die dicke Wand (4) einen im wesentlichen umfänglichen Rand (4₁) aufweist, der fest mit der zweiten Umhüllung (2) verbunden ist,
dadurch gekennzeichnet,
daß die dünne Wand (5) im wesentlichen die Form einer Glocke mit einem im wesentlichen umfänglichen Rand (5₁) hat, welcher fest mit der zweiten Umhüllung verbunden ist, wobei die dünne Wand mit der dicken Wand (4) nur durch einen Teil dieses Randes (5₁) verbunden ist, wobei die Arbeitskammer (A) und die Kompensationskammer (B) auf nicht konzentrische Art auf der Oberfläche der zweiten Umhüllung (2) angeordnet sind, welche fest mit dem elastomeren Körper (3) verbunden ist.

2. Dämpfende Stütze nach Anspruch 1, bei welcher die Ränder (4₁, 5₁) der dicken Wand und der dünnen Wand des elastomeren Körpers auf eine feste, durchbrochene Platte (6) aufgegossen sind, welche an der zweiten Umhüllung (2) befestigt ist.

3. Dämpfende Stütze nach irgendeinem der Ansprüche 1 und 2, bei welcher der enge Kanal (C) von einer Nut (7) der durchbrochenen Platte (6) gebildet ist, wobei die Ränder dieser Nut in Druckkontakt gegen die zweite Umhüllung (2) gebracht sind.

4. Dämpfende Stütze nach irgendeinem der vorangehenden Ansprüche, bei welcher die erste Umhüllung (1) ein längliches Element entlang einer Achse X ist, welche im wesentlichen senkrecht zur Hauptschwingungsrichtung Z ist, wobei die Stütze außerdem einen festen Bogen (8) aufweist, der an der zweiten Umhüllung befestigt ist und der um die erste Umhüllung und um den elastomeren Körper herum angeordnet ist, wobei der elastomere Körper wenigstens einen ersten Nocken (9) aufweist, der sich gegenüber der zweiten Umhüllung ausgehend von der ersten Umhüllung erstreckt, wobei dieser erste Nocken angepaßt ist, um gegen den Bogen (8) anzuschlagen, um die Verschiebung der ersten Umhüllung in Entfernung im Verhältnis zur zweiten Umhüllung entlang der Hauptschwingungsrichtung Z zu begrenzen.

5. Dämpfende Stütze nach Anspruch 4, bei welcher der elastomere Körper einen zweiten Nocken (10) aufweist, der sich gegen die zweite Umhüllung (2) ausgehend von der ersten Umhüllung (1) erstreckt und in das Innere der Arbeitskammer (A) eindringt, um die Verschiebung der ersten Umhüllung gegen die zweite Umhüllung zu begrenzen.

6. Dämpfende Stütze nach irgendeinem der Ansprüche 4 und 5, bei welcher der elastomere Körper außerdem wenigstens einen seitlichen Nocken (11,12) aufweist, der sich gegen den Bogen (8) im wesentlichen rechtwinklig zur Hauptschwingungsrichtung Z ausgehend von der ersten Umhüllung (1) erstreckt und der angepaßt ist, um gegen den Bogen (8) zur Begrenzung der Ablenkung der ersten Umhüllung parallel zur zweiten Umhüllung anzuschlagen.

7. Dämpfende Stütze nach irgendeinem der Ansprüche 4 bis 6, bei welcher der Bogen (8) eine gebogene Platte ist, die die dünne Platte (5) des elastomeren Körpers abdeckt.

8. Dämpfende Stütze nach irgendeinem der Ansprüche 4 bis 7, bei welcher die Kompensationskammer (B) im Verhältnis zur Arbeitskammer (A) parallel zur X-Achse ausgerichtet ist.

9. Dämpfende Stütze nach irgendeinem der Ansprüche 4 bis 8, bei welcher die erste Umhüllung (1) ein fester Arm ist, der einen Bereich (1a) aufweist, auf welchen der elastomere Körper (3) aufgegossen ist und der außerdem einen vorstehenden Bereich (1b) aufweist, der sich außerhalb des elastomeren Körpers erstreckt und mit Befestigungsmitteln (1c) versehen ist.

10. Dämpfende Stütze nach irgendeinem der vorangehenden Ansprüche, bei welcher die beiden Kammern (A,B) durch einen zweiten Durchtritt (D) verbunden sind, welcher durch eine Klappe (13) mit einer begrenzten Auslenkung verschlossen ist.

11. Dämpfende Stütze nach Anspruch 10, bei welcher die Klappe (13) auf einer Stütze (14) befestigt ist, die zwischen der Arbeitskammer (A) und der zweiten Umhüllung (2) angeordnet ist, wobei die Klappe eine Seite in Kontakt mit der in der Arbeitskammer (A) enthaltenen Flüssigkeit und eine Seite aufweist, die gegen die zweite Umhüllung gerichtet ist, welche mit der Kompensationskammer (B) durch Zwischenschaltung des zweiten Durchtrittskanales (D) kommuniziert, wobei der zweite Durchtrittskanal zwischen dem elastomeren Körper (3) und der zweiten Umhüllung ausgebildet ist.

## Claims

1. Hydraulic vibration-damping mount intended to be interposed between two rigid elements in order to damp out vibrations between these two elements, essentially in a main direction of vibration Z, this mount including a first rigid reinforcing member (1) and a second rigid reinforcing member (2) which can be secured respectively to the two rigid elements to be joined together, an elastomeric body (3) which includes a thick wall (4) joining the two rigid reinforcing members (1, 2) to one another and partially delimiting a working chamber (A), this elastomeric body (3) further including a freely deformable thin wall (5) which partially delimits a compensation chamber (B) communicating with the working chamber (A) via a narrow duct (C), the two chambers (A, B) and the narrow duct (C) being filled with a liquid, one (2) of the two reinforcing members, hereafter termed second reinforcing member, being a plate which is substantially perpendicular to the main direction of vibration Z and which exhibits a face secured in leaktight fashion to the elastomeric body in order to delimit, together with the latter, the two chambers (A, B) and the narrow duct (C), the thick wall (4) exhibiting a substantially peripheral edge (4₁) which is secured to the second reinforcing member (2),
**characterized in that** the thin wall (5) substantially exhibits the shape of a bell including a substantially peripheral edge (5₁) which is secured to the second reinforcing member, said thin wall being connected to the thick wall (4) only by part of said edge (5₁), the working chamber (A) and compensation chamber (B) being juxtaposed non-concentrically on the face of the second reinforcing member (2) which is secured to the elastomeric body (3).

2. Vibration-damping mount according to Claim 1, in which the edges (4₁, 5₁) of the thick wall and of the thin wall of the elastomeric body are overmolded onto a rigid perforated plate (6) which is fixed to the second reinforcing member (2).

3. Vibration-damping mount according to either one of Claims 1 and 2, in which the narrow duct (C) is formed by a groove (7) in the perforated plate (6), the edges of said groove being applied in leaktight contact against the second reinforcing member (2).

4. Vibration-damping mount according to any one of the preceding claims, in which the first reinforcing member (1) is a member which is elongate along an axis X substantially perpendicular to the main direction of vibration Z, the mount further including a rigid hoop (8) which is fixed to the second reinforcing member and which is located around the first reinforcing member and the elastomeric body, the elastomeric body including at least a first boss (9) which extends opposite the second reinforcing member from the first reinforcing member, this first boss being suitable for abutting against the hoop (8) in order to limit the travel of the first reinforcing member away from the second reinforcing member in the main direction of vibration Z.

5. Vibration-damping mount according to Claim 4, in which the elastomeric body includes a second boss (10) which extends toward the second reinforcing member (2) from the first reinforcing member (1) and which penetrates inside the working chamber (A) in order to limit the travel of the first reinforcing member toward the second reinforcing member.

6. Vibration-damping mount according to either one of Claims 4 and 5, in which the elastomeric body further includes at least one lateral boss (11, 12) which extends toward the hoop (8) substantially perpendicularly to the main direction of vibration Z from the first reinforcing member (1), and which is suitable for abutting against the hoop (8) in order to limit the excursion of the first reinforcing member parallel to the second reinforcing member.

7. Vibration-damping mount according to any one of Claims 4 to 6, in which the hoop (8) is a curved plate, which covers the thin wall (5) of the elastomeric body.

8. Vibration-damping mount according to any one of Claims 4 to 7, in which the compensation chamber (B) is aligned with respect to the working chamber (A) parallel to the axis X.

9. Vibration-damping mount according to any one of Claims 4 to 8, in which the first reinforcing member (1) is a rigid arm which exhibits a part (1a) onto which the elastomeric body (3) is overmolded, and which also exhibits a projecting part (1b) extending out of the elastomeric body and provided with fixing means (1c).

10. Vibration-damping mount according to any one of the preceding claims, in which the two chambers (A, B) are connected by a secondary passage (D) which is closed off by a valve (13) having a limited excursion.

11. Vibration-damping mount according to Claim 10, in which the valve (13) is mounted on a support (14) which is interposed between the working chamber (A) and the second reinforcing member (2), the valve having one side in contact with the liquid contained in the working chamber (A) and one side pointing toward the second reinforcing member, which communicates with the compensation chamber (B) by means of the secondary passage (D), said secondary passage being formed between the elastomeric body (3) and the secondary reinforcing member (2).
